# EUROPEAN PATENT SPECIFICATION

(11) **EP 1 764 254 B1**
(45) Date of publication and mention of the grant of the patent: **20.01.2010**
(21) Application number: 05108670.0
(22) Date of filing: 20.09.2005
(51) Int. Cl.: B60K 28/16

(54) **Improved control system for an industrial truck**
Verbessertes Kontrollsystem für ein Flurförderfahrzeug
Système de commande améliorée pour un chariot industriel

(43) Date of publication of application: 21.03.2007
(73) Proprietor: Atlet AB, 43582 Mölnlycke (SE)
(72) Inventor: Ulmestrand, Dan, 425 65, Hisings Kärra (SE); von Brömsen, Stefan, 435 30, Mölnlycke (SE); Berggren, Peter, 435 31, Mölnlycke (SE)
(74) Representative: Lind, Urban Arvid Oskar

(56) References cited:
- EP-A- 0 664 273
- EP-A- 1 270 495
- DE-C1- 4 011 974
- US-A- 4 075 538
- US-A- 5 091 685
- US-A- 5 272 634
- US-A1- 2003 156 934

## Description

### Field of the invention

The present invention relates to an improved control system for an industrial truck. Further, the invention relates to a method for such improved control.

### Background of the invention

Industrial material handling vehicles, here commonly referred to as industrial trucks, such as lift trucks or pallet trucks, are commonly found in warehouses, factories, shipping yards, and, generally, wherever pallets, packages, or loads of goods are required to be moved from place to place. In the following particularly fork lift trucks will be discussed, but it will be appreciated that corresponding problems arise also in other types of industrial trucks, and that corresponding operating means can be used also for such vehicles.

In package picking and delivery applications, it is generally desirable to move as many packages as possible, in as little time as possible, such that packages or pallets can be delivered with a high degree of efficiency. Therefore, lift and pallet trucks are typically operated at a relatively high rate of speed, whereby the risk of hazardous situations are ever existing. For e.g. there is a risk of too high weight being carried by the trucks, insufficient braking capacity, etc. Further, a common problem for industrial trucks in today's working environment is that the wear of the trucks, and especially the driving wheels, are increased, due to slipping and spinning, etc, which increases the need for service and repair, and thus increases the operating costs for the trucks.

In EP 0 798 260 and EP 0 798 261 methods for determining the displacement of the load forks in a hydraulic system are disclosed. In these methods, the current or voltage supplied to the hydraulic system is used for providing an estimate of the flow of hydraulic oil in the system, which in turn is used to provide a measure of the displacement. However, these methods are only usable in a limited number of industrial trucks, using e.g. specific types of electrical motors. Further, these known systems are relatively expensive and difficult to implement.

EP 0 664 273, which shows the preamble of claims 1 and 9, discloses an industrial truck having a hydraulic lifting system, and with a pump controlled based on sensors sensing the angular position and angular velocity of the pump. However, there is no disclosure in EP 0 664 273 indicating that such sensor signals may also be used for determining e.g. the load being lifted.

EP 1 270 495 discloses a method for estimating the weight of a lifted load. However, this system is not intended to be used in an industrial truck, but in a stacker crane. Further, the weight is here estimated based on the stretching length of a mechanical lifting member, such as a chain, and by means of separate sensors.

US 4 075 538 is concerned with detection of slipping and spinning, where a speed signal is compared with predetermined threshold values. Further, US 5 272 634 is related to a similar system used to provide anti-blocking for the drive wheel. Neither of these documents is concerned with the hydraulic system, or with estimation of weight.

There is therefore a need for an improved control systems for industrial trucks, which could be used e.g. for automatic control of the truck in certain situations, and thereby reduce the wear on the truck, and improve the controllability of the truck in order to improve safety, etc. Even though many such solutions for improved control systems have been proposed during the years, most of said systems are in general not sufficient for avoiding the above-related problems, and/ or are too expensive and difficult to implement.

### Summary of the invention

It is therefore an object of the present invention to provide a control system for an industrial truck, and a method for operation of the same, which is more effective and/or is more cost efficient than previously known systems, and which thereby alleviates the above-discussed problems.

This object is achieved with a control system and a method according to the appended claims.

According to a first aspect of the invention there is provided a method for controlling an industrial truck according to claim 1.

The controller could be realized in an already existing control means on the truck, such as in a vehicle controller or a motor controller, or be realized as a separate controller unit, or a combination of the two.

The motor could e.g. be a hydraulic pump for driving the fork lift system.

The real time speed signal is preferably a signal representing the revolution speed of a revolving part of the motor, i.e. an rpm signal. Such a signal can preferably be provided by mean of a sensor. The sensor is preferably associated with the motor, and can e.g. be a detector, such as a quadrature detector, or a gauge measuring the rotation of the moving part in a hydraulic pump. Such a real-time feed back signal to be sent to a controller is per se previously known, and is commonly used in industrial trucks for controlling the speed and power of the power generating system. Accordingly, the method and control system according to this invention is relatively easy and cost effective to implement, since much of the required hardware are already in place in conventional trucks of today.

The sensor for measuring the actual motor speed in real time can be realized in hardware, but can also be realized in software, such as being based on a calculation algorithm in the motor controller.

The real time speed signal is preferably provided continuously over at least a certain period of time, as a continuous analogue signal or as a continuous digital signal with a high enough resolution and bit rate to provide real time information to the control system.

The secondary data can be used to control the truck in a number of different ways, such as one or several of the following:
- Activation of corrective measures.
- Activation of an alarm, such as a summer or an alarm light.
- Activation of restrictions on the operability, such as lowering the maximum lifting height etc.

By the above-defined analysis of the sensor signal representing the actual motor speed in real time it becomes possible to detect a number of different abnormal or erroneous operating conditions, and/or situations which may not be abnormal, but which requires certain safety measures etc. For example, the inventive method make it possible to detect one or several of the following conditions and parameters:
- Determination of the weight being carried by the fork lifts, which may be used to generate a warning signal if the weight is to heavy, or to introduce safety limitations on the height into which the load could be lifted, the speed with which the truck could be driven, etc.
- Determination of the position of the fork lifts or other displaceable parts of the truck, in order to generate a warning signal if the height is inappropriate for the weight carried, to introduce safety limitations on the speed with which the truck could be driven, etc.
- Determination of a need for preventive maintenance, when e.g. threshold values for certain parameters are exceeded, etc.
- Determination of energy wasting conditions, to be used in e.g. an energy saving system.

The at least one motor includes a pump motor for driving a hydraulic system of the truck, wherein the speed signal represents the flow of hydraulic fluid through the pump, and wherein the step of analyzing involves comparing said signal to a pump speed control signal provided to the pump motor, for provision of secondary data related to a weight estimation of the weight load being moved by the hydraulic system.

The pump speed control signal is related to the power supplied to the pump, whereas the resulting flow of fluid in the hydraulic system, i.e. the time it takes to move the moving parts, is dependent on the weight load being moved by the hydraulic system. Since this relationship may be precisely determined beforehand, this analysis may provide a very accurate estimate of the weight load.

In order to determine the weight load, it is also possible to provide a certain pump speed control signal, e.g. a full speed signal or a half-speed signal, during a certain time period, e.g. during one second, in order to execute the analysis. Such an automatically initiated test may be performed immediately following any lifting operation or the like.

Additionally, the at least one motor can include a pump motor for driving a hydraulic system of the truck, wherein the speed signal represents the flow of hydraulic fluid through the pump, and wherein the step of analyzing involves comparing said signal to predetermined data related to the relation between the flow of hydraulic fluid and the resulting movement of the movable part driven by said hydraulic system, for provision of secondary data related to a resulting displacement from a reference position.

Hereby, it is possible to integrate the received speed signal over time for calculation of the total resulting displacement, whereby the actual position in relation to a reference position can be determined. By doing this continuously, and e.g. using an end position as the reference, it is hereby also possible to continuously determine the absolute position.

The inventive method is preferably applied to a motor of an industrial truck which is constituted by an electric motor or a hydraulic engine.

According to another aspect of the invention, there is provided a control system according to claim 9.

By means of this aspect, similar advantages as discussed above in relation to the first aspect are obtainable.

These and other aspects of the invention will be apparent from and elicidated with reference to the embodiments described hereinafter.

### Brief description of the drawings

For exemplifying purposes, the invention will be described in closer detail in the following with reference to embodiments thereof illustrated in the attached drawings, wherein:
Fig 1 is a schematic overview of an exemplary industrial truck in which can be used in conjunction with the present invention;
Fig 2 is a schematic block diagram of the industrial truck in fig. 1;
Fig 3 is a flow chart illustrating a method for detecting slipping according to one embodiment of the invention;
Fig 4 is a schematic block diagram of the hydraulic system of the industrial truck in fig. 1, illustrated in greater detail; and
Fig 5 is a flow chart illustrating a method for estimating weight according to one embodiment of the invention.

### Description of preferred embodiments

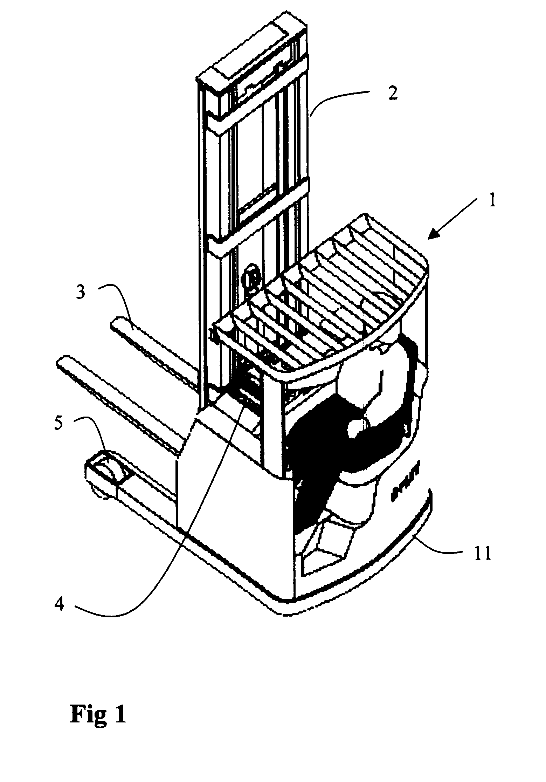

Referring now to Fig. 1, there is shown a perspective view of an industrial truck 1, in the preferred embodiment being referred to as a fork lift truck. Vehicle 1 comprises a frame 11, to which are mounted the major operating components of the vehicle 1, such as a main telescoping mast 2, for lifting of forks 3, an operator control station 4, two non-steerable wheels 5, and a drive wheel 6 (not visible in fig 1).

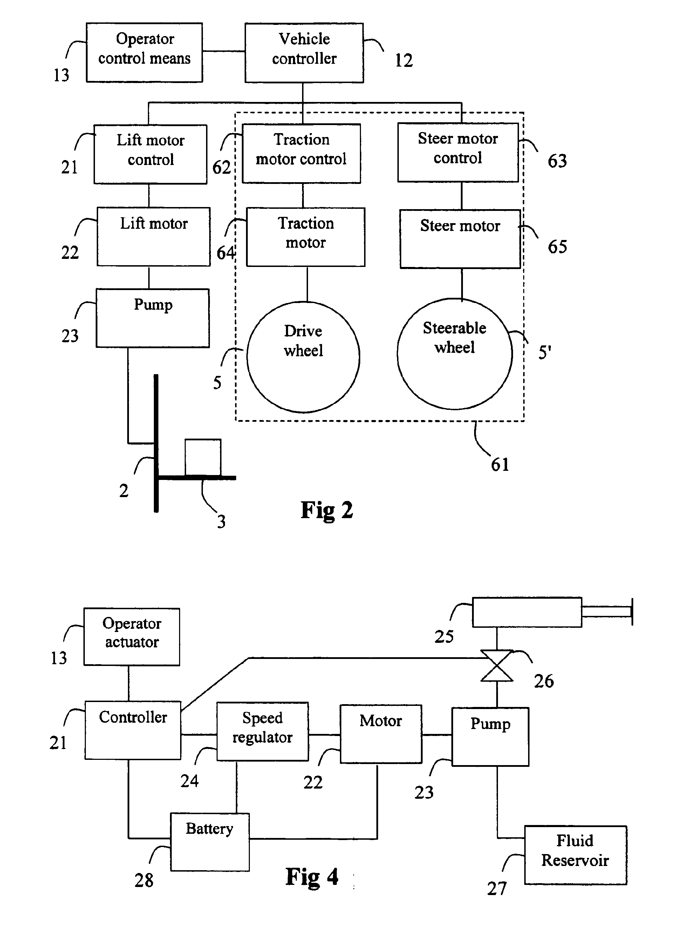

Referring now to Fig. 2, a block diagram of the lift truck 1 in Fig 1 is illustrated. The lift truck comprises a vehicle controller 12 which receives operator input signals from operator control means 13, such as handles, key switches, pedals, stick controllers, steer wheels, control buttons etc. Based on the received signals , the controller provides command signals to each of a lift motor control 21 and a drive system 61 including both a traction motor control 62 and a steer motor control 63, as is per se known in the art. The drive system provides a motive force for driving the lift truck in a selected direction, while the lift motor control 21 drives forks 3 along the mast 2 to raise or lower a load. The lift truck 1 and vehicle controller 12 are powered by an electric energy source, such as one or more battery (not shown).

The vehicle controller 12 may be a separate unit, or be integrated with one or several of the other controllers 21, 62 and 63.

The traction motor control 62 drives a traction motor 64 which is connected to a drive wheel 5 to provide motive force to the lift truck. The speed of the traction motor 64 and associated wheels is selected by the operator from an operator control handle or the like, and is typically monitored and controlled through feedback provided by an encoder or other feedback device coupled to the traction motor 64. The wheel 5 may also be connected to a friction brake through the drive motor, providing both a service and parking brake function for the lift truck 1. The traction motor 64 is typically an electric motor.

The steer motor control 63 is connected to drive a steer motor 65 and associated steerable wheel 5' in a direction selected by the operator. An encoder or other feedback device is typically coupled to the steer motor, and a signal is provided to the steer motor control 63 to maintain the direction of travel of the lift truck 1 within a predetermined range of the selected direction of motion. The steerable wheel 5' and the drive wheel 5 may be one and the same, i.e. a single, combination steering and drive wheel 5 that is driven by the traction motor 64 via an internal drive shaft (not shown).

The lift motor control 21 provides command signals to control a lift motor 22 which is connected to a hydraulic circuit including a pump 23 for driving the forks 3 along the mast 2, thereby moving the load up or down. In some applications, the mast 2 can be a telescoping mast, whereby additional hydraulic circuitry is provided to raise or lower the mast 2 as well as the forks 3.

### Anti spin traction control and anti brake lock control

In an embodiment, the traction motor for driving the drive wheel of the truck may be provided with a sensor for providing real time speed data of the drive wheel. The sensor can e.g. be sensors which measure the number of revolutions of the wheels and their circumferential speed, such as quadrature gages, which are per se well known in the art. However, the sensor may also be realized in software, e.g. by means of a calculation algorithm in the motor controller.

By means of the speed signal generated by the sensor, the actual speed of the wheel is determinable, and this can serve for determining the slip by making a comparison to predetermined ramp data for acceleration/deceleration and/or to a drive speed control signal provided to the traction motor from the traction motor control. If positive torques are produced (in a forward direction) such as in driving forwards and braking backwards a positive slip will result. On the contrary, if torques are produced in a backward direction (in braking during a forward travel and driving in a backward travel) a negative slip will result.
Slipping may be determined by means of comparing the speed signal generated by the sensor during acceleration/deceleration with predetermined data. For example, it is possible to determine a maximum acceleration A' or deceleration D' that is achievable for the truck. Such data is determinable by test measurements, by theoretic calculations, etc. The derivate of the actual speed signal, AS', or the differential quotient of the speed signal between different times, can then be compared to the maximum acceleration A' and deceleration D', and if AS' is higher than A' or lower than D' a slipping condition is determinable. Hence, in the analysis of predetermined ramp data, it is possible to determine abnormalities such as a too steep ramp in acceleration/deceleration, abnormal fluctuations in the ramp, etc, i.e. conditions that would normally not arise during acceleration or deceleration operations when there is no slipping of the driving wheel against the underlying surface.

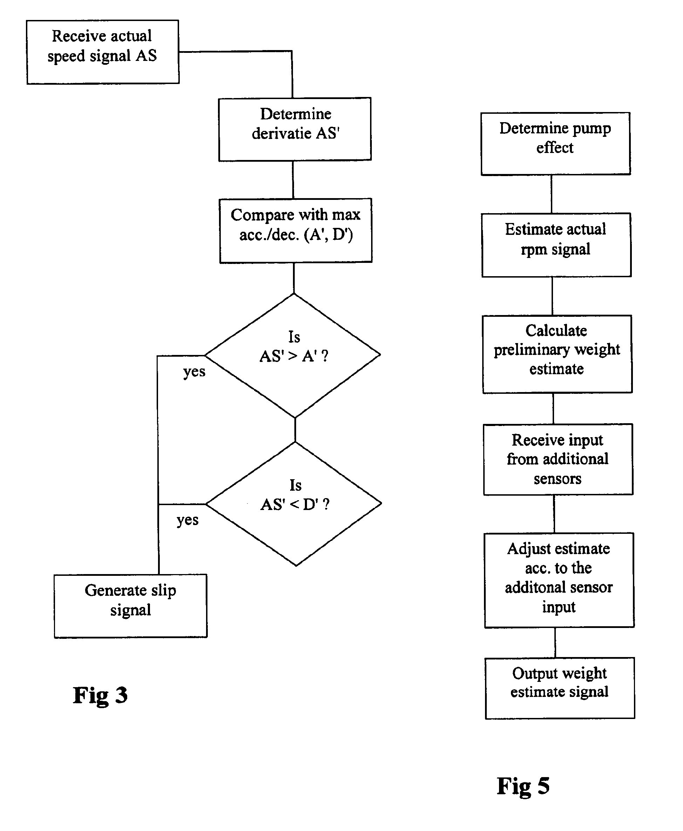

A control method using a combination of the above-discussed comparisons for detecting slipping is illustrated in the flow chart of Fig. 3.

The secondary data indicative of such slipping and sliding can be used for controlling the speed control signal sent to the traction motor, in order to provide an anti-brake lock and/or an anti-spin functionality. Hereby, the controller may automatically adjust the ordered speed to the same value as the present actual speed, and thereafter gradually restore the ordered speed to what was originally requested, as long as the ordered speed of the operator exceeds the present actual speed. Hereby, the amount of the torque of the driving motor is reduced in dependence from the difference between the actual speed and the ordered speed. Implementation of anti-spin and anti-brake lock functionality is per se previously known, and the secondary input data as generated by means of the present invention may be used as input in essentially all such previously known systems. The larger the slip is the larger will be the corrective moment so that it is sure anyway that the torque which is the respective optimum will be applied to the driving wheel or the braked wheel.

As a complement, additional input for recognition of slipping may also be used, in order to make the determination even more reliable. For example, the actual speed signal AS may be compared to a speed signal from one or several of the other wheels of the lifting truck, e.g. in the way disclosed in US 6 799 652 (said document hereby incorporated by reference).

### Impact detection

In a similar manner as discussed above for detection of slipping, it is also possible to detect impact in collisions and the like. It is possible to distinguish between slipping and impacts in various ways. For example, if the difference between the difference between the derivative AS' and the maximum deceleration D' exceeds a certain threshold value, this may also be used as an indication of the occurrence of an impact. Several such threshold values may also be used to determined impacts of different severities. Different threshold values may also be used in dependence on the actual steering angle being used.

The above-discussed way of detecting and determining impacts may also be combined with other impact detection means, such as accelerometer sensors and the like, which are per se previously known in the art, for provision of an even more reliable detection of such events.

The secondary data indicative of such impacts can be used for controlling the lifting truck in various ways. For example, it may be used for an automatic request for inspection, maintenance or service of the lifting truck (see below). Still further, it may also be used for activation of safety measures, such as automatic brake activation, automatic decrease of the traction, or the like.

### Precautionary call for service

In a similar manner as discussed above and in the following, the detection of certain parameters, such as weight being lifted, spinning, slipping, impacts, travel distance etc, may be used for an automatic request for inspection, maintenance or service of the lifting truck. For example, a determination of a need for precautionary service can be made when e.g. threshold values for certain parameters are exceeded, such as:
- the number of impacts of a certain magnitude exceeds a threshold value, since repeated impacts may cause defects due to the shaking and vibration of certain parts of the lifting truck.
- the number of powerful and heavy decelerations, which wears on the wheels and brakes of the truck.
- the number of times spinning or slipping have occurred, which wears on the wheels.
- the travel distance that has been traveled.
- Etc

### Travel distance estimation

The actual speed signal AS may also, in a similar manner as discussed above for detection of slipping, be used to determine the distance traveled by the truck. In this case, the actual speed signal AS is compared to predetermined data related to the relation between the speed of the driving wheel and the resulting movement of the truck driven by said drive wheel. Such predetermined data may be acquired by test measurements, by theoretic calculations, etc.

The secondary data indicative of such impacts can be used for controlling the lifting truck in various ways. For example, it may be used for an automatic request for inspection, maintenance or service of the lifting truck after a certain travel distance (see above).

### Weight indication

A pump motor is provided for driving a hydraulic system of the truck, for example the lift motor. In this case, the speed signal represents the flow of hydraulic fluid through the pump. Different sensors for generation of such signals are possible, such as a sensor measuring the revolutions of a rotating or moving part of the motor or pump (rpm). It has been found by these inventors that by comparing this speed signal to a pump speed control signal provided to the pump motor, it is possible to estimate the weight of the weight load being moved by the hydraulic system. The pump speed control signal is related to the power supplied to the pump, whereas the resulting flow of fluid in the hydraulic system, i.e. the time it takes to move the moving parts, is dependent on the weight load being moved. Since this relationship may be precisely determined beforehand, this analysis may provide a very accurate estimate of the weight load.

An exemplary hydraulic system that could be used in conjunction with this functionality is illustrated in greater detail in Fig 4. This system comprises a hydraulic pump 23 connected to a hydraulic cylinder or piston 25, for moving a movable part, via an electrically controllable valve 26, which is controlled by a controller 21, and a hydraulic fluid reservoir 27. The hydraulic pump 23 is driven by an electrical-motor 22 that in turn via electronically controlled speed regulation 24 is connected to an electric energy source, such as a battery 28, and the controller 21. When the hydraulic cylinder 25 is to be activated the driver of the truck indicates this by means of an actuator 13, whereby the controller registers this, starts the motor and opens the valve 26.

The controller 21 and the speed regulator 24 may be realized as separate units, or may integrated in one unit.

In experiments it has been established that a rpm signal from the pump or pump motor is essentially linearly dependent on the weight. By comparing this signal to predetermined reference data for the same provided power to the pump motor, it is possible to estimate the weight with an accuracy of e.g. +/- 25 kg within a range of at least 0-2500 kg. The rpm signal is preferably evaluated during a certain time period for providing an adequate weight estimate. This time period is preferably in the range of 0.5 - 5 seconds, and preferably about 1.5 seconds.

During the weight estimation process, the pump effect may be controlled to be at a certain value, e.g. 20%, 50% or 100% of the maximum pump effect. Hereby, reference data to be used for the weight estimation need only be provided for this exact pump effect, and such reference data is obtainable through measurements at one or several reference load weights, and/or through theoretical calculations. Alternatively, it is possible to provide reference data for different pump effects, such as in a certain range. In this case, the weight estimate is preferably made when the pump effect is within the range of 20-80%, and most preferably within 20-50%. However, 0-100% is also a feasible alternative. In case a broad range is used, the weight estimation process can be made essentially unnoticeable for the truck operator. Since the rpm signal to the pump motor is essentially linearly dependent on the load, at least within these ranges, reference data can be provided relatively easy for such a range based on one or several measurements at certain pump effect values. Thus, the controller may in case restrict the pump effect to be within this range during the time when the weight estimation takes place, but when a extended range is used, this would normally not be noticeable for the operator. However, even other dependencies than linear may be determined and used, for e.g. to be used for other ranges of the pump effect.

Preferably, the above-discussed weight estimation is automatically initiated and executed at the start of every new lift operation. This may e.g. be accomplished by activating the weight estimation process at every requested lift upwards for the forks. However, in case the weight estimation process imposes restrictions on the users operability of the truck, it may be considered to limit the number of weight estimations. For example, the weight estimation process may be restricted only to situations where the lift occurs from certain positions, such as below a certain height or the like. It is also possible to use an additional sensor, such as a pressure or load indicator, an optical sensor or the like, to determine when a load is present on the forks, and then restrict the weight estimation to take place only when such a load is at hand, or only when new goods is loaded on the forks.

A control method for estimating weight in accordance with the discussion above is illustrated in the flow chart of Fig. 5.
- In order to achieve a good weight estimate, the system is preferably calibrated at least once, and preferably at a regular basis.
Hereby, reference values are provided for the end positions of the load weight range, and also for the entire lifting height range of the fork lift system. These reference values can be used as initial reference data for estimation of the load weight based on the rpm signals, and for calibration of previously determined relationships.

In order to improve the accuracy of the weight estimation even further, it is possible to make adjustments for varying conditions related to the environment or the hydraulic system. For example, it is possible to determine the temperature of the hydraulic fluid, e.g. by means of a temperature sensor, and to use this temperature data for adjusting the weight estimation. In experiments it has been determined that the temperature dependency is essentially linear, at least for certain ranges and under certain conditions. For example, a suitable adjustment for the test equipment used was found to be approximately - 4 kg / deg. C in a temperature range of 20 - 80 deg. C. In a similar manner, it is also possible to improve the estimation further by making adjustments based on other parameters, such as battery voltage level.

The secondary data indicative of the weight load on the forks can be used for controlling the speed control signal sent to the traction motor, in order to restrict the performance of the truck in one or several directions. It may also be used to restrict the operability of the lifting system, and e.g. to restrict the available lift height, the tilt and reach capabilities, etc. An overweight alarm or the like may also be activated in case the lifted load is too heavy.

As a complement, additional input for estimation of the weight may also be used, in order to make the determination even more reliable and redundant. To this end, load or pressure sensors may be arranged in the hydraulic system or the lift system, as is per se known in the art.

The above-discussed measuring process is related to the lifting operation, when the weight is raised. However, a similar method can be used to determine the weight when the weight is lowered.

### Positioning of load etc

The above-discussed real time speed signal representing the actual motor speed in the hydraulic system may also be used for determining displacement of the movable parts, and thus for position estimation of said parts. These signals, for example related to the rpm of the pump motor, are associated with the flow of hydraulic fluid through the pump, which in turn is associated with the displacement generated by the hydraulic system. Is it thereby possible to generate predetermined data related to the relation between the flow of hydraulic fluid and the resulting movement of the movable part driven by said hydraulic system. Thus, by integrating these signal over time it becomes possible to determine the displacement from a reference point with great accuracy, whereby an absolute position is determinable. Various reference points may be used, but preferably a lowered and retracted position, which is normally present when the truck is at rest, is used as the reference position.

In this way, it is possible to determine the position of essentially all movable parts and movements which are operated by means of a hydraulic system, such as lifting of the forks, projection of the forks for reach operations, tilting of the forks or the mast, lateral movements of the forks (so called side-shifts), lifting of the mast, etc. It is also possible to use this method of position estimation for other systems, such as the system controlling the steering angle of the steer wheel.

In experimental measurements it has been found that this positioning estimation can be made very accurate and reliable, and e.g. for the fork lift system an accuracy of +/- 10 mm has been determined within a lifting range of 0-3.20 m, and an accuracy of +/- 20 mm for the reach operation.

Fluid temperature, the weight of the load, etc, may influence the measured results, but corrections may be made to this respect, in a similar way as discussed above in relation to the weight estimation, in order to improve the precision even further when estimating (calculating) the position of the movable part of the hydraulic system.

As in the above-discussed weight estimation, calibration is preferably made at installation, and preferably also periodically. The control device of the movement may hereby include a self learning function. This may for instance be done in such a way that when the truck is started the movable part is moved between its end position, whereby said end positions may be stored as reference data.

The above-discussed method of estimating movements of movable parts can be used for movements both forwards and upwards, i.e. in both the two directions. If several hydraulic cylinders are operable through the same hydraulic system, it is possible to distinguish the movements of the individual cylinders. This could e.g. be accomplished by operating the cylinders at separate times, by determining or estimating the part of the hydraulic flow going to each of the hydraulic cylinders, etc. It is also possible to use separate hydraulic system for the hydraulic cylinders, or semi-separate systems, using e.g. separate pumps.

The secondary data indicative of the position of the movable parts can be used for controlling the speed control signal sent to the traction motor, in order to restrict the speed of the truck in one or several directions when e.g. the mast is in an elevated position. The position estimate can also be used for instance for speed reduction (ramping) at the ends of the working stroke of the movable part in its respective directions.

### Further alternative embodiments

The invention has now been described by a number of exemplary embodiments. However, it should be appreciated by someone skilled in the art, that many further alternatives are feasible. For example, the above-discussed embodiments may be combined in various ways. Further, the above-discussed methodology may be used for control for other motors than the ones specifically discussed, and for estimation of other types of data and parameters usable for improved control of the truck. Still further, the implementation of the control method could be accomplished in different ways, such as in especially dedicated hardware or in software for control of already existing control means. Such and other obvious modifications must be considered to be within the scope of the present invention, as it is defined by the appended claims.

## Claims

1. A method for controlling an industrial truck (1) comprising at least one pump motor (22) for driving a movable part (2; 3) by means of a hydraulic system of the truck, comprising the steps:
providing a real time speed signal representing the actual motor speed in real time to a controller (21);
**characterized by** the additional steps of:
analyzing, in said controller (21), the received speed signal by comparing it to a pump speed control signal provided to the pump motor (22), said pump speed control signal representing the power supplied to the pump motor (22), wherein said analysis is based on a predetermined weight dependency of the actual motor speed in relation to said power supplied to the pump motor (22);
generating secondary control data related to a weight estimation of the weight load being moved by the hydraulic system based on said analysis; and using said secondary control data for controlling the truck (1).

2. The method of claim 1, wherein the step of analyzing further involves comparing said signal to predetermined data related to the relation between the pump motor (22) speed and the resulting movement of the movable part (2; 3) driven by said hydraulic system, for provision of secondary data related to a resulting displacement from a reference position.

3. The method of claim 1 or 2, wherein the received speed signal is analyzed during a certain time period for providing an adequate weight estimate, said time period preferably being in the range of 0.5 - 5 seconds, and most preferably about 1.5 seconds.

4. The method of any one of the preceding claims, wherein during the weight estimation, the pump effect is controlled to be at a predetermined value or within a predetermined range.

5. The method of any one of the preceding claims, wherein weight estimation is automatically performed at the start of every new lift operation.

6. The method of any one of the claims 1-4, wherein weight estimation is performed when the lift occurs from certain positions, when load is present on the forks (3), and/or when load is added to the forks (3).

7. The method of any one of the preceding claims, wherein the analyzing further involves adjustments for varying related to the environment or the hydraulic systems, such as the temperature of the hydraulic fluid.

8. The method of any one of the preceding claims, wherein the use of said secondary control data for controlling the truck comprise at least one of restricting the performance of the truck in one or several directions, restricting the operability of the lifting system, and e.g. to restrict the available lift height, the tilt and reach capabilities, and issuing an overweight alarm in case the lifted load is too heavy.

9. A control system for an industrial truck (1) comprising at least one pump motor (22) for driving a movable part (2; 3) by means of a hydraulic system of the truck (1), comprising:
means for providing a measure of the actual motor speed in real time;
a controller (21); and
a signal connection for transmitting a real time speed signal representing the actual motor speed in real time to the controller (21);
**characterized in that**
said controller (21) is arranged to analyze the received speed signal by comparing it to a pump speed control signal provided to the at least one pump motor (22), said pump speed control signal representing the power supplied to the pump motor (22), wherein said analysis is based on a predetermined weight dependency of the actual motor speed in relation to said power supplied to the pump motor (22); and **in that** said controller (21) is further arranged to generate secondary control data related to a weight estimation of the weight load being moved by the hydraulic system based on said analysis, said secondary control data being usable for controlling the truck (1).

10. The control system of claim 9, wherein the controller (21) is further adapted to analyze the received speed signal by comparing said signal to predetermined data related to the relation between the pump speed signal and the resulting movement of the movable part driven by said hydraulic system, for provision of secondary data related to a resulting displacement from a reference position.

11. The control system of claim 9 or 10, wherein the received speed signal is analyzed during a certain time period for providing an adequate weight estimate, said time period preferably being in the range of 0.5 - 5 seconds, and most preferably about 1.5 seconds.

12. The control system of any one of the claims 9-11, wherein weight estimation is automatically performed at the start of every new lift operation.

13. The control system of any one of the claims 9-12, wherein the analyzing further involves adjustments for varying related to the environment or the hydraulic systems, such as the temperature of the hydraulic fluid.

14. The control system of any one of the claims 9-13, wherein the use of said secondary control data for controlling the truck (1) comprise at least one of restricting the performance of the truck in one or several directions, restricting the operability of the lifting system, and e.g. to restrict the available lift height, the tilt and reach capabilities, and issuing an overweight alarm in case the lifted load is too heavy.

15. An industrial truck (1) having a control system according to any one of the claims 9-14.

## Patentansprüche

1. Verfahren zum Steuern eines Flurförderfahrzeugs (1), das mindestens einen Pumpenmotor (22) zum Antreiben eines beweglichen Teils (2; 3) mittels eines Hydrauliksystems des Fahrzeugs umfasst, wobei das Verfahren folgende Schritte umfasst:
Übermitteln eines Echtzeit-Drehzahlsignals, das die Ist-Drehzahl des Motors darstellt, in Echtzeit an eine Steuereinheit (21);
**gekennzeichnet durch** folgende weitere Schritte:
Analysieren des empfangenen Drehzahlsignals in der Steuereinheit (21) **durch** Vergleichen des empfangenen Drehzahlsignals mit einem Pumpendrehzahlsteuersignal, das an den Pumpenmotor (22) übermittelt wird, wobei das Pumpendrehzahlsteuersignal die dem Pumpenmotor (22) zugeführte Leistung darstellt, wobei sich die Analyse auf eine vorgegebene Gewichtsabhängigkeit der Ist-Motordrehzahl in Relation zu der dem Pumpenmotor (22) zugeführten Leistung gründet;
Erzeugen sekundärer Steuerungsdaten, die zu einer Gewichtsschätzung der **durch** das Hydrauliksystem bewegten Gewichtslast in Beziehung stehen, anhand der Analyse; und
Verwenden dieser sekundären Steuerungsdaten zum Steuern des Fahrzeugs.

2. Verfahren nach Anspruch 1, wobei der Schritt des Analysierens des Weiteren das Vergleichen des Signals mit zuvor festgelegten Daten enthält, die zu der Relation zwischen der Drehzahl des Pumpenmotors (22) und der resultierenden Bewegung des durch das Hydrauliksystem angetriebenen beweglichen Teils (2; 3) in Beziehung stehen, zum Erzeugen sekundärer Daten, die zu einer resultierenden Verschiebung gegenüber einer Bezugsposition in Beziehung stehen.

3. Verfahren nach Anspruch 1 oder 2, wobei das empfangene Drehzahlsignal während eines bestimmten Zeitraums analysiert wird, um eine stimmige Gewichtsschätzung zu erreichen, wobei dieser Zeitraum bevorzugt im Bereich von 0,5 - 5 Sekunden liegt und ganz besonders bevorzugt etwa 1,5 Sekunden beträgt.

4. Verfahren nach einem der vorangehenden Ansprüche, wobei während der Gewichtsschätzung die Pumpwirkung auf einen zuvor festgelegten Wert oder innerhalb eines zuvor festgelegten Bereichs geregelt wird.

5. Verfahren nach einem der vorangehenden Ansprüche, wobei die Gewichtsschätzung automatisch am Beginn jedes neuen Hebevorgangs ausgeführt wird.

6. Verfahren nach einem der Ansprüche 1-4, wobei die Gewichtsschätzung ausgeführt wird, wenn der Hebevorgang von bestimmten Positionen aus beginnt, wenn eine Last auf der Gabel (3) liegt und/oder wenn eine Last auf die Gabel (3) gelegt wird.

7. Verfahren nach einem der vorangehenden Ansprüche, wobei das Analysieren des Weiteren die Berücksichtigung von Veränderungen in der Umgebung oder im Hydrauliksystem, wie zum Beispiel die Temperatur der Hydraulikflüssigkeit, beinhaltet.

8. Verfahren nach einem der vorangehenden Ansprüche, wobei die Nutzung der sekundären Steuerungsdaten zum Steuern des Fahrzeugs mindestens eines von Folgendem umfasst: Drosseln der Leistung des Fahrzeugs in einer oder mehreren Richtungen, Einschränken der Funktionstüchtigkeit des Hebesystems, und zum Beispiel Begrenzen der verfügbaren Hubhöhe, der Neigung und der Reichweite, und Abgeben eines Überlastalarms, falls die gehobene Last zu schwer ist.

9. Steuerungssystem für ein Flurförderfahrzeug (1), das mindestens einen Pumpenmotor (22) zum Antreiben eines beweglichen Teils (2; 3) mittels eines Hydrauliksystems des Fahrzeugs (1) umfasst, wobei das Steuerungssystem Folgendes umfasst:
Mittel zum Ausgeben eines Messwertes der Ist-Motordrehzahl in Echtzeit;
eine Steuereinheit (21); und
eine Signalverbindung zum Übertragen eines Echtzeit-Drehzahlsignals, das die Ist-Motordrehzahl darstellt, in Echtzeit an die Steuereinheit (21);
**dadurch gekennzeichnet, dass:**
die Steuereinheit (21) dafür konfiguriert ist, das empfangene Drehzahlsignal durch Vergleichen des empfangenen Drehzahlsignals mit einem Pumpendrehzahlsteuersignal, das an den mindestens einen Pumpenmotor (22) übermittelt wird, zu analysieren, wobei das Pumpendrehzahlsteuersignal die dem Pumpenmotor (22) zugeführte Leistung darstellt, wobei sich die Analyse auf eine vorgegebene Gewichtsabhängigkeit der Ist-Motordrehzahl in Relation zu der dem Pumpenmotor (22) zugeführten Leistung gründet; und
dass die Steuereinheit (21) des Weiteren dafür konfiguriert ist, sekundäre Steuerungsdaten, die zu einer Gewichtsschätzung der durch das Hydrauliksystem bewegten Gewichtslast in Beziehung stehen, anhand der Analyse zu erzeugen; wobei die sekundären Steuerungsdaten zum Steuern des Fahrzeugs (1) genutzt werden können.

10. Steuerungssystem nach Anspruch 9, wobei die Steuereinheit (21) des Weiteren dafür konfiguriert ist, das empfangene Drehzahlsignal durch Vergleichen des Signals mit zuvor festgelegten Daten, die zu der Relation zwischen dem Pumpendrehzahlsignal und der resultierenden Bewegung des durch das Hydrauliksystem angetriebenen beweglichen Teils in Beziehung stehen, zu analysieren, um sekundäre Daten zu erzeugen, die zu einer resultierenden Verschiebung gegenüber einer Bezugsposition in Beziehung stehen.

11. Steuerungssystem nach Anspruch 9 oder 10, wobei das empfangene Drehzahlsignal während eines bestimmten Zeitraums analysiert wird, um eine stimmige Gewichtsschätzung zu erreichen, wobei dieser Zeitraum bevorzugt im Bereich von 0,5 - 5 Sekunden liegt und ganz besonders bevorzugt etwa 1,5 Sekunden beträgt.

12. Steuerungssystem nach einem der Ansprüche 9-11, wobei die Gewichtsschätzung automatisch am Beginn jedes neuen Hebevorgangs ausgeführt wird.

13. Steuerungssystem nach einem der Ansprüche 9-12, wobei das Analysieren des Weiteren die Berücksichtigung von Veränderungen in der Umgebung oder im Hydrauliksystem, wie zum Beispiel die Temperatur der Hydraulikflüssigkeit, beinhaltet.

14. Steuerungssystem nach einem der Ansprüche 9-13, wobei die Nutzung der sekundären Steuerungsdaten zum Steuern des Fahrzeugs (1) mindestens eines von Folgendem umfasst: Drosseln der Leistung des Fahrzeugs in einer oder mehreren Richtungen, Einschränken der Funktionstüchtigkeit des Hebesystems, und zum Beispiel Begrenzen der verfügbaren Hubhöhe, der Neigung und der Reichweite, und Abgeben eines Überlastalarms, falls die gehobene Last zu schwer ist.

15. Flurförderfahrzeug (1) mit einem Steuerungssystem nach einem der Ansprüche 9-14.

## Revendications

1. Procédé de commande d'un chariot industriel (1) comprenant au moins un moteur de pompe (22) pour entraîner une partie déplaçable (2;3) au moyen d'un système hydraulique du chariot, comprenant les étapes consistant à:
fournir un signal de vitesse en temps réel représentant la vitesse de moteur effective en temps réel à un contrôleur (21);
**caractérisé par** les étapes additionnelles consistant à:
analyser, dans ledit contrôleur (21), le signal de vitesse reçue en le comparant avec un signal de commande de vitesse de pompe fourni au moteur de pompe (22), ledit signal de commande de vitesse de pompe représentant la puissance alimentée dans le moteur de pompe (22), dans lequel ladite analyse est basée sur une dépendance de poids prédéterminée de la vitesse de moteur effective en relation avec ladite puissance fournie au moteur de pompe (22);
générer des données de commande secondaires relatives à une estimation de poids sur la charge de poids étant déplacée par le système hydraulique sur la base de ladite analyse; et
utiliser lesdites données de commande secondaires pour commander le chariot (1).

2. Procédé selon la revendication 1, dans lequel l'étape d'analyse inclut en outre de comparer ledit signal avec des données prédéterminées relatives à la relation entre la vitesse du moteur de pompe (22) et le mouvement résultant de la partie déplaçable (2;3) entraînée par ledit système hydraulique, pour fournir des données secondaires relatives à un déplacement résultant à partir d'une position de référence.

3. Procédé selon la revendication 1 ou 2, dans lequel le signal de vitesse reçu est analysé pendant une certaine période de temps pour fournir une estimation de poids adéquate, ladite période de temps étant de préférence dans la plage de 0,5-5 secondes, et de manière encore préférée d'environ 1,5 secondes.

4. Procédé selon une quelconque des revendications précédentes, dans lequel pendant l'estimation du poids, l'effet de pompage est commandé afin d'être à une valeur déterminée ou dans une plage prédéterminée.

5. Procédé selon une quelconque des revendications précédentes, dans lequel l'estimation du poids est effectuée automatiquement au début de chaque nouvelle opération de levage.

6. Procédé selon une quelconque des revendications 1 à 4, dans lequel l'estimation du poids est effectuée quand le levage a lieu à partir de certaines positions, quand une charge est présente sur les fourches (3) et/ou quand la charge est ajoutée aux fourches (3).

7. Procédé selon une quelconque des revendications précédentes, dans lequel l'analyse implique en outre des ajustements de variation par rapport à l'environnement ou aux systèmes hydrauliques, comme la température du fluide hydraulique.

8. Procédé selon une quelconque des revendications précédentes, dans lequel l'utilisation desdites données de commande secondaires pour commander le chariot comprend au moins une de la restriction des performances du chariot dans une ou plusieurs directions, la restriction de l'opérabilité du système de levage et par ex. la restriction du poids soulevé disponible, les capacités de basculement et positionnement horizontal, et d'émettre une alarme de surpoids au cas où la charge soulevée est trop lourde.

9. Système de commande pour un chariot industriel (1) comprenant au moins un moteur de pompe (22) pour entraîner une partie déplaçable (2;3) au moyen d'un système hydraulique du chariot (1), comprenant:
des moyens pour fournir une mesure de la vitesse de moteur effective en temps réel;
un contrôleur (21); et
une connexion de signaux pour transmettre un signal de vitesse en temps réel représentant la vitesse de moteur effective en temps réel au contrôleur (21);
**caractérisé en ce que**
ledit contrôleur (21) est agencé afin d'analyser le signal de vitesse reçu en le comparant à un signal de commande de vitesse de pompe fourni à au moins un moteur de pompe (22), ledit signal de commande de vitesse de pompe représentant la puissance alimentée dans le moteur de pompe (22), dans lequel ladite analyse est basée sur une dépendance de poids prédéterminée de la vitesse de moteur effective en relation avec ladite puissance alimentée dans le moteur de pompe (22); et **en ce que** ledit contrôleur (21) est en outre agencé afin de générer des données de commande secondaires relatives à une estimation de poids sur la charge de poids étant déplacée par le système hydraulique sur la base de ladite analyse, lesdites données de commande secondaires étant utilisables pour commander le chariot (1).

10. Système de commande selon la revendication 9, dans lequel le contrôleur (21) est en outre adapté afin d'analyser le signal de vitesse reçu en comparant ledit signal avec des données prédéterminées relatives à la relation entre le signal de vitesse de pompe et le mouvement résultant de la partie déplaçable entraînée par ledit système hydraulique, pour fournir des données secondaires relatives à un déplacement résultant à partir d'une position de référence.

11. Système de commande selon la revendication 9 ou 10, dans lequel le signal de vitesse reçu est analysé pendant une certaine période de temps pour fournir une estimation de poids adéquate, ladite période de temps étant de préférence dans la plage de 0,5-5 secondes, et de manière encore préférée d'environ 1,5 secondes.

12. Système de commande selon une quelconque des revendications 9 à 11, dans lequel 'estimation de poids est effectuée automatiquement au démarrage de chaque nouvelle opération de levage.

13. Système de commande selon une quelconque des revendications 9 à 12, dans lequel l'analyse implique en outre des ajustements de variation par rapport à l'environnement ou aux systèmes hydrauliques, comme la température du fluide hydraulique.

14. Système de commande selon une quelconque des revendications 9 à 13, dans lequel l'utilisation desdites données de commande secondaires pour commander le chariot comprend au moins une de la restriction des performances du chariot dans une ou plusieurs directions, la restriction de l'opérabilité du système de levage et par ex. la restriction du poids soulevé disponible, les capacités de basculement et positionnement horizontal, et d'émettre une alarme de surpoids au cas où la charge soulevée est trop lourde.

15. Chariot industriel (1) ayant un système de commande selon une quelconque des revendications 9 à 14.
